(19) Europäisches Patentamt
European Patent Office –
Office européen des brevets

(11) Veröffentlichungsnummer: **0 000 777**
A1

(12) **EUROPÄISCHE PATENTANMELDUNG**

(21) Anmeldenummer: **78100590.5**

(22) Anmeldetag: **03.06.78**

(51) Int. Cl.²: **F 04 B 49/08**, F 16 H 39/46
G 05 D 17/00

(30) Priorität: **03.06.77 DE 2734933**

(43) Veröffentlichungstag der Anmeldung:
**21.02.79 Patentblatt 79/4**

(84) Benannte Vertragsstaaten:
**FR GB SE**

(71) Anmelder: **Linde Aktiengesellschaft**

**D-8023 Höllriegelskreuth(DE)**

(72) Erfinder: **Heyl, Walter**
**Sattelhecke 17**
**D-8752 Johannesberg(DE)**

(54) **Regeleinrichtung für eine Axialkolbenpumpe.**

㊽ Regeleinrichtung für eine Stelleinrichtung mit einem Stellkolben mit großem Hub für eine Axialkolbenpumpe und mit einem vom Förderdruck der Pumpe beaufschlagten Druckmeßsteuerkolben, der auf einen Steuerschieber einwirkt, von dem aus der Zu- und Abfluß zu den druckräumen am Stellkolben gesteuert wird und mit einem zweiarmigen Hebel, auf dessen einen Arm eine vorgegebene Kraft in einem von der Lage des Stellkolbens abhängigen Abstand vom Gelenkpunkt einwirkt und gegen die andere Seite des Hebels der Steuerkolben anliegt und diesem gegenüber eine Feder wirkt, wobei der Hebel als Winkelhebel ausgestaltet ist.

Fig. 1

EP 0 000 777 A1

## Regeleinrichtung für eine Axialkolbenpumpe

Die Erfindung betrifft eine Regeleinrichtung für die Stelleinrichtung einer Axialkolbenpumpe mit einem Stellglied und mit einem mit dem Stellglied verbundenen als Differentialkolben ausgestalteten Stellkolben, dessen kleine Fläche unmittelbar vom Förderdruck beaufschlagt ist und dessen große Fläche über das Steuerorgan vom Förderdruck beaufschlagt ist, wobei die Regeleinrichtung weiterhin mit einem Steuerorgan (Steuerschieber) und mit einem Winkelhebel versehen ist.

Bei einer bekannten Regeleinrichtung dieser Art zum Konstanthalten des Produktes aus Druck und Hubvolumen bei Verdrängerpumpen ist der Drehpunkt des Winkelhebels nicht ortsfest sondern der Winkelhebel ist am Druckmeßkolben angelenkt und mit einem Schlitz versehen, in dem ein mit dem Stellkolben verbundener Zapfen gleitet (DT-OS 1 653 385). Dadurch entsteht eine sehr labile Konstruktion, die insbesondere dann, wenn die Maschine Erschütterungen ausgesetzt ist, zu Störungen neigt. Die Reibungskräfte führen zu Fehlern und die Seitenkräfte am Druckmeßkolben (Steuerkolben) führen zu erhöhtem Verschleiß und damit erhöhter Leckage und damit zu erhöhtem Leistungsverlust. Ein weiterer Nachteil dieser Einrichtung ist, daß bei gegebenen Reglerabmessungen das Hyperbelgesetz nur mit einem Parameter verändert werden kann mit der Folge, daß keine optimale Anpassung an die Erfordernisse möglich ist.

Weiterhin ist diese Ausgestaltung nicht geeignet für Stell- bzw. Regeleinrichtungen, bei denen der Stellkolben einen großen Kolbenhub zurücklegen muß. Das ist insbesondere bei Pumpen der Fall, die nach dem Schwenkschlittenprinzip konstruiert sind. Bei diesen bereitet es auch konstruktiv erhebliche Schwierigkeiten, die Druck-Weg-Meß-Feder unmittelbar mit dem Stellkolben zu verbinden, da eine Feder für einen solchen großen Federhub einerseits sehr großvolumig ist und damit sehr viel Bauraum erfordert, andererseits aber auch erheblichen Aufwand zum Vermeiden des Knickens der Feder erforderlich macht.

Bei einer anderen bekannten Einrichtung ist zumindest annähernd parallel zum Stellkolben ein Hebel angeordnet, wobei ein Ende des Hebels gelenkig mit dem Stellkolben verbunden ist und zwischen dem anderen Ende des Hebels und dem Stellkolben eine Feder eingespannt ist und wobei der Hebel mit seiner Seitenfläche gegen den Steuerschieber drückt. Auch hier ist also der Gelenkpunkt des Hebels ortsveränderlich und führt ein Verschieben des Stellkolbens zu Seitenkräften an dem Steuerschieber (DT-OS 2 003 774).

Weiterhin ist eine Regeleinrichtung für die Stelleinrichtung einer Axialkolbenpumpe mit einem Stellglied und mit einem mit dem Stellglied verbundenen als Differentialkolben ausgestalteten Stellkolben, dessen kleine Fläche unmittelbar vom Förderdruck beaufschlagt ist und dessen große Fläche über das Steuerorgan vom Förderdruck beaufschlagt ist bekannt mit einem Steuerschieber und mit einem Winkelhebel, dessen Schwenkachse ortsfest am Gehäuse gelagert ist, wobei mit dem Stellkolben ein Kraftgeberglied verbunden ist, das einen Druckkörper aufweist, der senkrecht zur Achse des Stellkolbens gegen einen Schenkel des Winkelhebels anliegt. Bei dieser bekannten Einrichtung ist dieser Druckkörper der vom Steuerdruck beaufschlagte Steuerkolben, wobei das Ende des Winkelhebels, gegen das der Druckkörper anliegt, gegen eine gehäusefeste Feder abgestützt ist und das andere Ende des Winkelhebels durch ein Gelenk mit dem Steuerschieber verbunden ist (DT-OS 2 017 656). Der im Stellkolben gelagerte Steuerkolben ist konstruktiv aufwendig und auch hier treten sowohl am Steuerkolben als auch am Stellkolben Seitenkräfte auf, und zwar am Stellkolben ganz erhebliche.

Auch bei einer anderen bekannten Einrichtung wird zum Übertragen der Kräfte ein Hebelsystem mit veränderlichem Übersetzungsverhältnis verwendet. Hierbei ist der Stellkolben mit einer Kulisse verbunden, die gegen das Stellteil anliegt und andererseits gegen einen Hebel anliegt, der ein Ende des Hebels gegen einen vom Förderdruck beaufschlagten Kolben abgestützt ist und das zweite Ende gegen den von einer Feder gestützten Steuerschieber abgestützt ist (DT-AS 1 044 620). Auch hier ist der Gelenkpunkt des zweiarmigen Hebels ortsbeweglich.

In kinematischer Umkehrung zu dem bereits genannten durch die DT-OS 2 003 774 bekannten Stand der Technik ist bei deren bekannten Regeleinrichtungen der Hebel mit einem Ende ortsfest gelagert und mit dem anderen Ende gegen eine ortsfest abgestützte Feder abgestützt und ist das Steuerventil in der Kolbenstange eines zumindest annähernd parallel zu dem Hebel verschiebbaren Kolbens angeordnet. Auch hier treten wieder die Nachteile auf, die bereits in Zusammenhang mit dem in der Kolbenstange angeordneten Steuerkolben gemäß DT-OS 2 017 656 erläutert wurden (DT-OS 1 498 288 und 1 267 092).

Auch bei einer anderen bekannten Regeleinrichtung wird ein Hebelsystem mit veränderlichen Übertragungsverhältnissen benutzt. In ähnlicher Weise wie bei den durch die DT-AS 1 044 620 bekannten Stand der Technik ist dabei ein Hebel vorge-

BAD ORIGINAL

sehen, dessen Gelenkpunkt verschiebbar ist und von dem ein Ende gegen eine Feder abgestützt ist. Hier ist jedoch die Vorspannkraft der Feder abhängig von der Lage des Stellkolbens veränderbar und wirkt das andere Ende des Hebels auf ein Druckregelventil ein. Auch hier treten wieder die eingangs beschriebenen Nachteile eines ortsveränderlichen Hebelgelenkes auf (DT-OS 1 400 630 und DT-OS 1 425 756).

Der Erfindung liegt die Aufgabe zugrunde, eine Regeleinrichtung zu schaffen, die für Maschinen mit großem Stellkolbenhub geeignet ist und die die genannten Nachteile vermeidet.

Diese Aufgabe wird durch die Kombination folgender Merkmale gelöst:

a) Die Schwenkachse des Winkelhebels ist ortsfest im Gehäuse gelagert.

b) Mit dem Stellkolben ist ein Kraftgeberglied verbunden, das einen Druckkörper aufweist, der senkrecht zur Achse des Stellkolbens oder zu einer Ebene, die parallel zur Stellkolbenachse liegt, verschiebbar ist und gegen einen Schenkel des Winkelhebels anliegt.

c) Zwischen dem Stellkolben und dem Druckkörper ist eine Feder eingespannt, und nur diese Federkraft wirkt zwischen Stellkolben und Druckkörper.

d) Ein vom Förderdruck beaufschlagter Steuerkolben liegt gegen eine Seite des zweiten Endes des Winkelhebels derart an, daß die Kraft des Steuerkolbens und die Kraft der Druckkörperfeder gegeneinander wirken und das Steuerorgan unter der Wirkung der Kraft der diesem zugeordneten Feder gegen die andere Seite dieses Endes des Winkelhebels anliegt, wobei die Feder unmittelbar auf das Steuerorgan einwirkt.

Mit einer solchen Einrichtung wird nicht nur die gestellte Aufgabe gelöst, sondern die Einrichtung hat darüber hinaus

- 5 -

den Vorteil, daß ein und dieselbe Einrichtung für einander ähnliche Pumpen verschiedener Größen verwendet und an diese angebaut werden kann, da bei kleinerem Stellkolbenhub lediglich der Weg, den der Druckkörper relativ zu dem einen Arm des Winkelhebels zurücklegt, kleiner wird.

Durch die Erfindung wird ein Regler ermöglicht, bei dem die Druck-Weg-Meß-Feder nur einen sehr kleinen Hub macht, obwohl der Stellkolben einen sehr großen Hub macht. Damit wird der Bauaufwand relativ gering. Insbesondere wird ein Regler geschaffen, der auch für nach dem Schwenkschlittenprinzip konstruierte Pumpen geeignet ist und darüber hinaus den für diese Pumpen erforderlichen Bauraum nicht wesentlich vergrößert. Die Anwendung einer Regeleinrichtung gemäß der Erfindung bei Schwenkschlittenmaschinen stellt einen wesentlichen Fortschritt dar.

Es sind zwei Federn vorhanden. Durch Ändern der Charakteristik jeder dieser beiden Federn kann die Regler-Charakteristik verändert werden, insbesondere die der Kraft des Steuerkolbens entgegenwirkende Feder kann ohne Schwierigkeiten derart eingebaut werden, daß ihre Vorspannung leicht eingestellt werden kann. Eine weitere Möglichkeit, die Regler-Charakteristik in anderer Weise zu bestimmen ergibt sich dadurch, daß die Fläche des Winkelhebels gegen die der Druckkörper anläuft, kurvenförmig gekrümmt wird.

Um Schwingungen des Reglers zu vermeiden, können Dämpfungseinrichtungen vorgesehen werden. Eine Möglichkeit zum Vorsehen einer Dämpfungsvorrichtung ist zwischen Druckkörper und Stellkolben gegeben, in dem zwischen diesen beiden ein Druckraum vorgesehen wird, der bei Zurückweichen des Druckkörpers verkleinert wird, wobei das Öl aus diesem Druckraum durch eine Drosselnut austritt. Andererseits kann der Raum vor der federseitigen Stirnfläche des Steuerschiebers als Dämpfungsraum ausgestaltet sein, der über eine Drosselstelle mit dem Innenraum verbunden ist. Diese Drosselstelle kann in zweckmäßiger Weiterausgestaltung einstellbar sein, um mit Sicherheit eine solche Dämpfung zu erzielen, die Schwingungsfreiheit garantiert, auf der anderen Seite aber ein nicht zu träges Ansprechen des Reglers bewirkt.

Auch sind verschiedene günstige Möglichkeiten gegeben, Anschlagschrauben oder anders gestaltete verstellbare Anschläge anzubauen, durch die der Weg des Stellkolbens des Steuerschiebers oder des Steuerkolbens begrenzt wird.

Steuerkolben und Steuerschieber einerseits und Stellkolben können in einer Ebene hintereinander liegen. Sie können aber auch in Richtung der Maschinenwelle gesehen nebeneinander angeordnet werden derart, daß die Achse des Steuerkolbens die Achse des Steuerschiebers und der Winkelhebel in einer Ebene liegen, die parallel zur Achse des Stellkolbens in Abstand von diesem verläuft. In diesem Falle liegt die Verschieberichtung des Druckkörpers in einer zumindest annähernd senkrecht zur Achse des Stellkolbens liegenden Ebene tangential zu dieser Achse. Das hat die Folge, daß die vom Druckkörper ausgeübte Kraft ein Drehmoment auf den Stellkörper ausübt, das an einer entsprechenden Abstützung aufgenommen werden muß. Diese Anordnung hat jedoch den Vorteil, daß wesentlich geringerer Bauraum erforderlich ist. Der gleiche Vorteil wird erzielt, wenn wie im ersten Falle die Achsen von Stellkolben, Steuerkolben und Steuerschieber in einer Ebene liegen, wobei diese jedoch senkrecht steht auf der Ebene, in der die Welle der Pumpe und der Zylindertrommelachse liegt.

Steuerkolben und Steuerschieber können koaxial zueinander angeordnet sein. Sie können aber auch in der Ebene, in der der Winkelhebel liegt, gegeneinander versetzt sein, so daß noch eine Hebelübersetzung zwischen Steuerkolben und Steuerschieber erzielt wird.

Form. 5729 7.78

Ein besonderer Vorteil ist auch darin zu sehen, daß die Einrichtung auch als Steuer- oder Regeleinrichtung für Mehrfachpumpen verwendet werden kann. In diesem Fall können zwei oder mehrere Steuerkolben parallel zueinander angeordnet sein, von denen jeder von einer Pumpe beaufschlagt wird. Oder der Steuerkolben kann als Stufenkolben ausgestaltet sein, wobei jede Stufe von einer Pumpe beaufschlagt wird. Der Stellkolben ist dann mit den verschiedenen Pumpen verbunden, beispielsweise bei Ausgestaltung der Pumpen als Schwenkschlittenpumpen mit den Schwenkschlitten der verschiedenen Pumpen oder mit einem allen Pumpen gemeinsamen Schwenkschlitten.

Für viele Anwendungsfälle, beispielsweise dann, wenn die Pumpe dauernd mit einer Brennkraftmaschine gekuppelt ist, wird gewünscht, daß für den Anlaufzustand die Pumpe nur ein geringes Drehmoment aufnimmt, damit die Antriebsmaschine unbelastet anlaufen kann, beispielsweise die Brennkraftmaschine ohne Belastung durch die Pumpe angelassen werden kann. Das macht erforderlich, daß die stillstehende Pumpe auf die Lage kleinstmöglichen Hubvolumens pro Umdrehung, insbesondere in Nullhublage zurückgeführt wird. Das kann dadurch erzielt werden, daß bei stillstehender Pumpe die den Druckkörper beaufschlagende Feder und bzw. insbesondere oder die den Steuerschieber beaufschlagende Feder entlastet werden kann. Eine solche Entlastung kann selbsttätig abhängig von einem Fliehkraftregler geschehen. Durch die Entlastung der Feder reicht der beim Anlassen oder Abstellen der Antriebsmaschine verbundene Umlaufdruck aus, um die Pumpe in die Lage für kleinstmögliches Hubvolumen zurückzustellen. Das Entlasten der Feder kann in Abhängigkeit von der Drehzahl wie erwähnt durch einen Fliehkraftregler mechanisch erfolgen oder kann dadurch erfolgen, daß eine Hilfspumpe vorgesehen wird, die zu einer Drosselstelle führt, wobei die Federvorspannung durch den Staudruck vor der Drosselstelle erzeugt wird. Bei Erreichen einer bestimmten vorgegebenen Drehzahl beim Anlassen wird dann die bestimmte Feder wieder vorgespannt und damit der Leistungsregler auf seinen Sollwert eingestellt. Als eine solche Drehzahl kann beispielsweise die untere oder die obere Leerlaufdrehzahl der Antriebsmaschine gewählt werden. Anstelle einer Hilfspumpe kann auch unmittelbar der Strom der Hauptpumpe verwendet werden, wenn dafür gesorgt ist, daß dieser nicht im Betrieb dauernd gedrosselt wird.

In Figur 1 der Zeichnung ist ein Ausführungsbeispiel des Erfindungsgegenstandes dargestellt.
Figur 2 zeigt einen Ausschnitt aus einer anderen Ausgestaltung mit veränderlicher Lage der Anlauffläche.

Auf dem Mittelzapfen 1 ist die in der Zeichnung nicht mehr dargestellte Zylindertrommel der Axialkolbenpumpe gelagert, die gegen den Steuerspiegel 2 an dem Schwenkschlitten 3 anliegt, der seinerseits gegen die hohlzylindrische Fläche 4 des Gehäusebodens 5 anliegt. Im Schwenkschlitten 3 ist eine Führungsbohrung 6 vorgesehen, in die der Mittelzapfen 1 eingreift und in die andererseits der Stellzapfen 8 mit seinem kugelförmigen Endteil 7 eingreift. Im Schwenkschlitten 3 sind weiterhin Steuernieren 9 gebildet, die durch die Kanäle 10 mit einem Kanal 11 im Gehäuseboden 5 in Verbindung stehen. Dieser Kanal 11 steht mit einem Zylinderraum 12 in Verbindung, in dem der Teil 13 kleinen Durchmessers des Stellkolbens 13, 14, verschiebbar ist. Der Teil 14 großen Durchmessers ist in dem Zylinder 15 verschiebbar, der durch einen Deckel 16 verschlossen ist. Im Deckel 16 ist eine Stellschraube 17 angeordnet, die durch eine Kontermutter 18 festgelegt werden kann und deren Stirnfläche einen Anschlag für den Verschiebeweg des Stellkolbens 13, 14 nach in der Zeichnung links darstellt. In entsprechender Weise bildet die Schraube 20, die durch eine Kontermutter 19 festgelegt werden kann, einen einstellbaren Anschlag für den Verschiebeweg des Stellkolbens 13, 14 nach in der Zeichnung rechts.

In dem Stellzapfen 8 ist eine Bohrung 29 vorgesehen, in die der Führungsteil 21 des Druckkörpers ragt, der mittels einer Kugel 28 gegen die Fläche 30 des Winkelhebels 31 anliegt. An dem Führungsteil 21 des Druckkörpers ist eine Nut 22 gebildet, die als Dämpfungsdrossel für die aus der Bohrung 29 bei Zurückweichen des Führungsteiles 21 austretende Flüssigkeit wirkt. Zwischen den Stellzapfen 8 und dem Schulterteil 27 des Druckkörpers ist eine erste Feder 26 eingespannt.

Der Winkelhebel 31 ist auf einem Lagerzapfen 32 leicht drehbar gelagert. Zum Erzielen eines geringen Widerstandes, kann auf dem Lagerzapfen 32 ein Wälzlager oder ein reibungsarmes, verschleißfestes Gleitlager vorgesehen sein.

Gegen den zweiten Arm 33 des Winkelhebels 31 liegt einerseits der Steuerkolben 34 an und liegt andererseits der Steuerschieber 35 unter der Wirkung der Kraft der zweiten Feder 36 an, die einerseits unmittelbar gegen den Steuerschieber 35 anliegt, andererseits gegen einen Federteller 37 abgestützt ist, dessen Lage durch eine Stellschraube 38 bestimmt wird, die durch eine Mutter 39 festgelegt ist.

Der Zylinder 12 ist an den Kanal 11 angeschlossen. Dieser Kanal 11 setzt sich fort in dem Kanal 40, der in dem Zylinder 41 mündet, in dem der Steuerkolben 34 verschiebbar ist. Von dem Kanal 40 zweigt weiterhin ein Zweigkanal 61 ab, der in die Bohrung 42 mündet, in der der Steuerschieber 35 verschiebbar ist. Dabei mündet der Zweigkanal 61 in einem Bereich der Bohrung 42, der immer einer Ringnut im Steuerschieber 35 gegenüberliegt, die in der Zeichnung links von dem Bund 43 liegt, der in der in der Zeichnung dargestellten Lage genau den Ringraum 44 abschließt. An diesen Ringraum 44 schließt ein Kanal 45 an, der zu dem Zylinder 15 führt. In der Zeichnung rechts von dem Ringraum 44 mündet in die Bohrung 42 eine Ablaßleitung 46.

Der Steuerkolben 34 ist mit einem Fortsatz 47 versehen, der gegen eine Stellschraube 48 zum Anliegen kommen kann, die durch eine Mutter 49 festgelegt werden kann. Durch die Stellschraube 48 kann der Steuerkolben 34 so verschoben werden, daß der Steuerschieber 35 mit seinem Bund 43 genau die Ringnut 44 verschließt. Sodann wird die Schraube 48 um ein vorbestimmtes Maß zurückgeschraubt und gibt damit den möglichen Rückzugweg des Steuerkolbens 34 frei.

Die Stellschraube 50 ist mit einem kegelförmigen Ende 51 versehen. Durch Vorschrauben der Schraube 50 kann der Weg, den die Kante 52 des Steuerschiebers 35 zurücklegen kann, begrenzt werden. Somit kann durch die Schrauben 50 und 48 in beiden Richtungen der größtmögliche freie Durchtrittsquerschnitt an der Kante der Ringnut 44 zwischen dieser und dem Bund 43 und damit die größtmögliche Stellgeschwindigkeit bestimmt werden. Durch Vorschrauben der Schrauben 50 derart, daß der kegelförmige Teil in die Bohrung 42 ragt, kann weiterhin die Bewegung der in der gleichen Ringnut der Kante 52 gegenüberliegenden Kante des Steuerschiebers 35 begrenzt werden, so daß beispielsweise bei der Demontage der Regeleinrichtung verhindert wird, daß der Steuerschieber 35 durch die zweite Feder 36 aus der Bohrung 42 herausgedrückt wird. Die Schraube 50 kann durch die Kontermutter 53 festgelegt werden.

Die Wirkungsweise ist folgende:
Vor Eingreifen des Reglers liegt der Förderdruck der Pumpe über den Kanal 11 in dem Zylinder 12 an und drückt somit auf die Stirnfläche des Stellkolbenteiles 13 und drückt somit den Stellkolben 13, 14 nach in der Zeichnung links in die Lage für größtes Hubvolumen der Pumpe. Überschreitet der Druck einen vorgesehenen Grenzwert, so drückt der Druck in dem Zylinder 41 den Steuerkolben 34 nach in der Zeichnung rechts und drückt dabei den Winkelhebel 31 entgegengesetzt dem Uhrzeigersinn, so daß der Druckkörper 27 gegen die Kraft der Feder 26 zurückgedrückt wird. Gleichzeitig wird der Steuerschieber 35 gegen die Kraft der zweiten Feder 36 zurückgedrückt, so daß der Bund 43 des Steuerschiebers 35 die Verbindung zwischen dem Zweigkanal 61 und dem Kanal 45 freigibt, so daß das Druckmittel mit einem durch die Drosselung in der Kante 43, 44 etwas verminderten Druck in den Zylinder 15 strömt. Da die Stirnfläche des Stellkolbenteiles 14 größer ist als die Stirnfläche des Stellkolbenteiles 13, wird der Stellkolben 13, 14 nach in der Zeichnung rechts verschoben und damit das Hubvolumen der Pumpe verringert. Damit wird aber auch der Hebelarm $y_0$ größer, mit dem der Druckkörper 27, 28 an dem Hebelarm 31 angreift, während der zweite Hebelarm e unverändert bleibt. Die Lage des Stellkolbens 13, 14 beeinflußt somit über die Länge des Hebelarmes $\hat{y_c}$ das Produkt aus diesem Hebelarm und der Kraft der ersten Feder 26. Sinkt der Förderdruck und somit der Druck in dem Kanal 11 ab, weicht der Steuerkolben unter der Wirkung der Feder 26 und 36 zurück mit der Folge, daß der Steuerschieber 35 die Verbindung zwischen dem Kanal 45 und der Ablaßleitung 46 freigibt mit der weiteren Folge, daß der Stellkolben 13, 14 nach in der Zeichnung links zurückweicht.

Durch die Bohrung 62 ist der Raum vcr der federseitigen Stirnfläche des Steuerschiebers 35 mit dem Gehäuseinnenraum 63 verbunden. In der Bohrung ist eine einstellbare Drosselstelle angeordnet. Dadurch ist eine einstellbare Dämpfung gegeben. Diese Drosselstelle ist in der Zeichnung nicht mehr dargestellt.

Abweichend von dem in der Zeichnung dargestellten Ausführungsbeispiel, bei dem die Fläche 30 des Winkelhebels 31, 33 gegen den der Druckkörper 27, 28 anläuft, geradlinig ist, kann in einer anderen Ausgestaltung diese Fläche des Winkelhebels 31, 33 gegen die der Druckkörper 27, 28 anläuft, kurvenförmig gekrümmt sein. Dadurch wird eine Veränderung der Charakteristik erzielt. Das ist besonders zweckmäßig für kleine Leistungen, bei denen die Pumpe einen großen Stellbereich durchlaufen muß. Es kann auch vorgesehen sein, daß auf ein und denselben Winkelhebel 31, 33 verschieden gekrümmte Kurvenbahnen aufgesetzt werden können. Weiterhin kann vorgesehen sein, daß auf den Winkelhebel 31, 33 ein Anlaufflächenkörper aufgesetzt ist, gegen dessen Anlauffläche der Druckkörper 27, 28 anläuft, wobei dieser Anlaufkörper derart mit dem Winkelhebel 31, 33 verbunden ist, daß die Lage der Anlauffläche gegenüber dem Winkelhebel verändert werden kann, beispielsweise mittels einer Stellschraube, die annähernd tangential zur Achse des Gelenkes 32 angeordnet ist, die Lage des Endes der Anlauffläche gegenüber diesem Arm 31 des Winkelhebels 31, 33 geändert werden kann. Da das gelenkseitige Ende der Anlauffläche unmittelbar am Winkelhebel 31, 33 anliegt, kann dadurch die Steigung der Anlauffläche gegenüber dem Winkelhebel eingestellt werden. Besonders zweckmäßig ist, wenn die genannte Stellschraube derart angeordnet ist, daß sie gut durch eine mittels eines Deckels verschließbare Öffnung im Gehäuse zugänglich ist.

Durch Fortlassen des Winkelhebels 31, 33 entsteht ein Nullhubregler bzw. Druckregler.

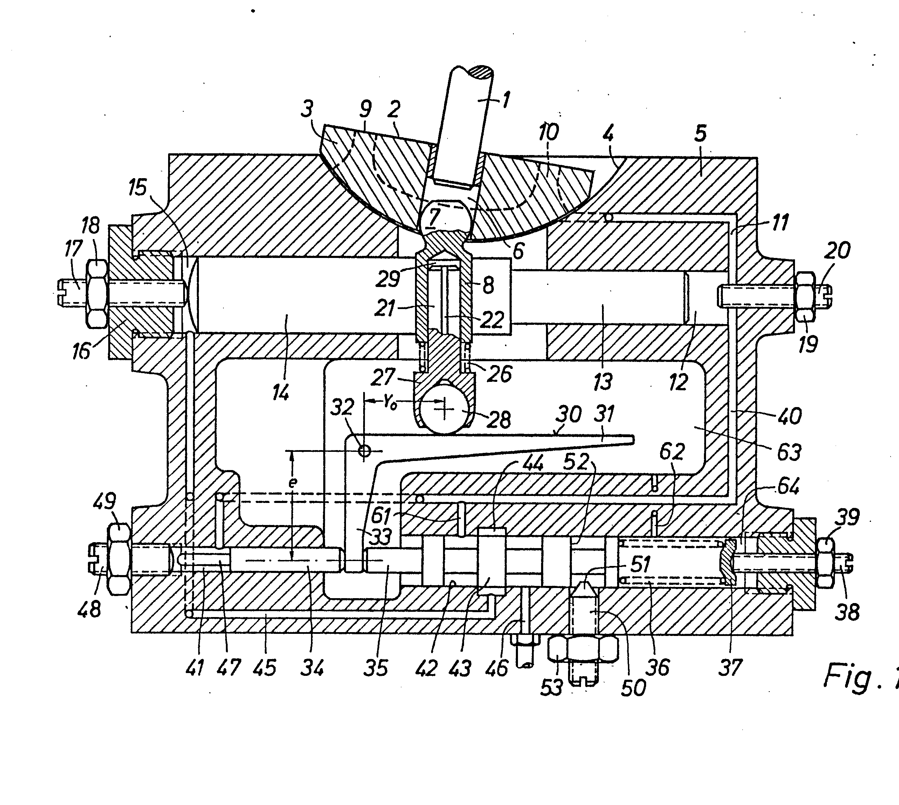

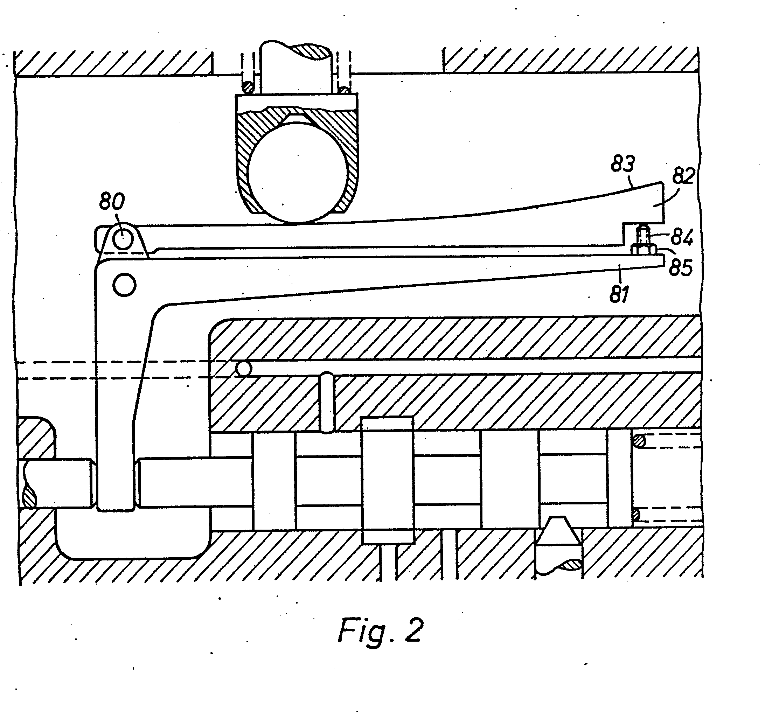

Die Ausgestaltungsform gemäß Figur 2 unterscheidet sich von der gemäß Figur 1 dadurch, daß an die Stelle des auf dem Gelenkzapfen 32 gelagerten Hebels 31 ein auf dem Gelenkzapfen 32 gelagerter Hebel 81 gesetzt ist, auf dem mittels des Gelenkes 80 ein weiterer Hebel 82 gelagert ist. Dieser Hebel 82 weist eine hyperbelförmig gekrümmte Fläche 83 auf, gegen die der Andrückkörper 28, 27 anliegt. Durch die Stellschraube 84 ist es möglich, die Lage des in der Zeichnung rechten Endes des Hebels 82 gegenüber dem entsprechenden Ende des Hebels 81 einzustellen. Durch die Feststellmutter 85 kann die Stellschraube 84 in beliebiger Lage festgelegt werden.

Patentansprüche

1. Regeleinrichtung für die Stelleinrichtung einer Axialkolbenpumpe mit einem Stellglied und mit einem vom Förderdruck der Pumpe beaufschlagten Steuerkolben (Druckmeßkolben) und mit einem Steuerorgan (Steuerschieber) und mit einem mit dem Stellglied verbundenen, als Differentialkolben ausgestalteten Stellkolben, dessen kleine Fläche unmittelbar von einem Druck, vorzugsweise dem Förderdruck der Pumpe beaufschlagt ist und dessen große Fläche über das Steuerorgan vom Förderdruck beaufschlagt ist und mit einem Winkelhebel, dessen Schwenkachse ortsfest im Gehäuse gelagert ist, wobei der Stellkolben mit einem Kraftgeberglied verbunden ist, das einen Druckkörper aufweist, der senkrecht zur Achse des Stellkolbens gegen einen Schenkel des Winkelhebels anliegt, gekennzeichnet durch die Kombination folgender Merkmale:

a) zwischen Stellkolben (13, 14) und Druckkörper (27, 28) ist als Kraftgeber nur eine Feder (26) eingespannt,

b) ein vom Förderdruck der Pumpe beaufschlagter Steuerkolben (34) liegt gegen eine Seite des zweiten Endes (33) des Winkelhebels (31) derart an, daß die Kraft des Steuerkolbens (34) und die Kraft der Druckkörper-Kraftgeberfeder (26) gegeneinander wirken und das Steuerorgan (35) liegt unter der Wirkung der Kraft der diesem zugeordneten zweiten Feder (36) gegen die andere Seite dieses Endes (33) des Winkelhebels (31) an, wobei die Feder (36) unmittelbar auf das Steuerorgan (35) einwirkt.

Form. 5729 7.78

2. Regeleinrichtung nach Anspruch 1, dadurch gekennzeichnet, daß zwischen Druckkörper (27, 28) und Stellkolben (13, 14) ein Dämpfungsraum (29, 22) geschaltet ist.

3. Regeleinrichtung nach Anspruch 1, dadurch gekennzeichnet, daß am Steuerorgan (Steuerschieber 35) ein Dämpfungsraum (64, 62) mit einer Drosselstelle im Abströmkanal (62) angeordnet ist.

4. Regeleinrichtung nach Anspruch 1, dadurch gekennzeichnet, daß die Achse des Stellkolbens (13, 14), die Achse des Steuerkolbens (34) und die Achse des Steuerschiebers (35) in einer Ebene liegen und die Schwenkachse (32) des Winkelhebels (31) senkrecht zu dieser Ebene liegt.

5. Regeleinrichtung nach Anspruch 4, dadurch gekennzeichnet, daß die genannte Ebene, in der die Achsen des Stellkolbens (13, 14), des Steuerkolbens (34) und des Steuerschiebers (35) liegen, in der gleichen Ebene liegt wie die Achse der Triebwelle oder dieser benachbart parallel zu dieser.

6. Regeleinrichtung nach Anspruch 4, dadurch gekennzeichnet, daß die genannte Ebene, in der die Achse des Stellkolbens (13, 14), die Achse des Steuerkolbens (34) und die Achse des Steuerschiebers (35) liegen, zur Welle der Maschine senkrecht steht.

7. Regeleinrichtung nach Anspruch 1, dadurch gekennzeichnet, daß die Achse des Steuerkolbens (34), die Achse des Steuerschiebers (35) und der Winkelhebel (31) in einer Ebene liegen, die parallel zur Achse des Stellkolbens (13, 14) in Abstand zu dieser verläuft und vorzugsweise senkrecht zur Achse der Maschinenwelle liegt.

8. Regeleinrichtung nach Anspruch 4 oder 7, dadurch gekennzeichnet, daß die Achsen von Steuerkolben (34) und Steuerschieber (35) koaxial zueinander angeordnet sind.

9. Regeleinrichtung nach Anspruch 1, gekennzeichnet durch ein in den Weg einer oder vorzugsweise zweier gegenüberliegender Kanten (52) des Steuerschiebers (35) verschiebbares keilförmiges Teil (51).

10. Regeleinrichtung nach Anspruch 1, gekennzeichnet durch eine einstellbare Anschlagschraube (48) für den Weg des Steuerkolbens (34).

11. Regeleinrichtung nach Anspruch 1, dadurch gekennzeichnet, daß die Fläche des Winkelhebels (31), gegen die der Druckkörper (27, 28) anliegt, kurvenförmig gekrümmt ist.

12. Regeleinrichtung nach Anspruch 1 oder 11, dadurch gekennzeichnet, daß die Lage der Anlauffläche, gegen die der Druckkörper (27, 28) anliegt, gegenüber dem Winkelhebel (31, 33) einstellbar ist.

13. Regeleinrichtung nach Anspruch 12, dadurch gekennzeichnet, daß zwischen dem dem Gelenk des Winkelhebels (31, 33) entfernten Teil der Anlauffläche, gegen die der Druckkörper anliegt, und dem Arm (31) des Winkelhebels (31, 33) eine Stellschraube, durch die der Abstand dieses Endes der Anlauffläche von dem Ende des Armes (31) des Winkelhebels (31, 33) einstellbar ist, angeordnet ist.

14. Regeleinrichtung nach Anspruch 1 für mehrere Pumpen, dadurch gekennzeichnet, daß zwei zueinander parallel geschaltete Steuerkolben auf den Winkelhebel (31) einwirken.

15. Regeleinrichtung nach Anspruch 1 für mehrere Pumpen, dadurch gekennzeichnet, daß der Steuerkolben als Stufenkolben ausgestaltet ist, wobei jede Stufe vom Förderdruck einer Pumpe beaufschlagt ist.

16. Regeleinrichtung nach Anspruch 1, gekennzeichnet durch eine steuerbare Entlastungsvorrichtung für mindestens eine der Federn (25 oder 26).

17. Regeleinrichtung nach Anspruch 16, dadurch gekennzeichnet, daß die mit der Entlastungsvorrichtung verbundene Feder gegen einen Kolben abgestützt ist, der unter Wirkung des vor einer Drosselstelle erzeugten Druckes gegen einen Anschlag anliegt.

18. Regeleinrichtung nach Anspruch 16, dadurch gekennzeichnet, daß die Entlastungsvorrichtung einen Fliehkraftregler aufweist.

19. Regeleinrichtung nach Anspruch 1, dadurch gekennzeichnet daß die von der Regeleinrichtung beeinflußte Pumpe eine Pumpe in Schwenkschlittenbauart ist und der Stellkolben (13, 14) mit einem Stellzapfen (7, 8) versehen ist, der in den Schwenkschlitten (3) eingreift.

20. Regeleinrichtung nach Anspruch 19, dadurch gekennzeichnet, daß der Stellzapfen (8) auf der dem Schwenkschlitten (3) abgewandten Seite die Führung für den Druckkörper (27, 18) aufweist.

Fig. 1

Fig. 2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>US - A - 3 969 896</u> (LOUIS)<br><br>* Figuren 1,4; Patentansprüche 1 bis 15 *<br><br>-- | 1 |
| A | <u>DE - A - 1 528 382</u> (BOSCH)<br><br>* Figuren 1 bis 5; Patentansprüche 1 bis 5 *<br><br>-- | 1 |
| A | <u>DE - A - 2 040 205</u> (REIFF)<br><br>* Figuren 1,2; Patentansprüche 1 bis 11 *<br><br>-- | 1 |
| A | <u>DE - A - 1 906 983</u> (SCHLINKE)<br><br>* Figur; Patentansprüche 1 bis 7 *<br><br>-- | 1 |
| A | <u>DE - A - 1 911 695</u> (HIMMLER)<br><br>* Figur 1; Patentansprüche 1 bis 4 *<br><br>-- | 1 |
| A | <u>US - A - 2 971 498</u> (BLOCH)<br><br>* Figur 1; Patentansprüche 1,2 *<br><br>-- | 1 |
| A | <u>DE - B - 1 623 779</u> (LEHLE)<br><br>* Figuren 1 bis 3; Patentansprüche 1 bis 5 *<br><br>-- | 1 |

./.

**KLASSIFIKATION DER ANMELDUNG (Int.Cl.³)**

F 04 B 49/08
F 16 H 39/46
G 05 D 17/00

**RECHERCHIERTE SACHGEBIETE (Int. Cl.³)**

F 04 B 49/08
F 04 B 1/30
F 01 B 3/10
F 03 C 1/06
F 16 H 39/46
F 16 H 39/50
G 05 D 17/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort<br>Den Haag | Abschlußdatum der Recherche<br>07-11-1978 | Prüfer<br>ANDRIES |
|---|---|---|

EPA form 1503.1 06.78

Europäisches
Patentamt

**EUROPÄISCHER RECHERCHENBERICHT**

| | **EINSCHLÄGIGE DOKUMENTE** | | | KLASSIFIKATION DER ANMELDUNG (Int.Cl.²) |
|---|---|---|---|---|
| Kategorie | Kennzeichnung des Dokuments mit Angabe, soweit erforderlich, der maßgeblichen Teile | betrifft Anspruch | | |
| A | <u>DE - B - 1 154 689</u> (VETTER)<br>* Figur; Patentansprüche 1-12 *<br><br>-- | 1 | | |
| A | <u>FR - A - 1 588 608</u> (OLIVIER)<br>* Figuren 1 bis 5; Zusammenfassung, Seiten 14 und 15 *<br><br>-- | 1 | | |
| A | <u>DE - A - 2 501 867</u> (DEININGER)<br>* Figuren 1,3,5-7; "Stellzapfen"; Seite 17 *<br><br>---- | 19 | | **RECHERCHIERTE SACHGEBIETE (Int. Cl.²)** |